# EUROPÄISCHE PATENTSCHRIFT

(11) **EP 1 923 199 B1**
(45) Veröffentlichungstag und Bekanntmachung des Hinweises auf die Patenterteilung: **21.07.2010**
(21) Anmeldenummer: 07020001.9
(22) Anmeldetag: 12.10.2007
(51) Int. Cl.: B29C 47/90, B29C 47/92, B29C 47/22, B29C 47/88

(54) **Vorrichtung zum Extrudieren von Hohlsträngen**
Device for extruding hollow rods
Dispositif destiné à extruder des faisceaux creux

(30) Priorität: 25.10.2006 DE 102006051103
(43) Veröffentlichungstag der Anmeldung: 21.05.2008
(73) Patentinhaber: INOEX GmbH, 32547 Bad Oeynhausen (DE)
(72) Erfinder: Diekhaus, Brigitte, 33659 Bielefeld (DE); Schmuhl, Jörg, Dr., 15711 Königs Wusterhausen (DE)
(74) Vertreter: Seewald, Jürgen

(56) Entgegenhaltungen:
- EP-A- 1 914 060
- DE-A1- 4 135 339
- DE-A1- 10 021 728
- JP-A- 4 119 818
- JP-A- 2002 264 202
- JP-A- 2004 264 758
- COLVIN R: "OPPORTUNITIES ABOUND IN WATER PIPE REPLACEMENT" MODERN PLASTICS INTERNATIONAL, MCGRAW-HILL,INC. LAUSANNE, CH, Bd. 27, Nr. 11, 1. November 1997 (1997-11-01), Seite 64/65,67, XP000731820 ISSN: 0026-8283

## Beschreibung

Die vorliegende Erfindung betrifft eine Vorrichtung zum Extrudieren von Hohlsträngen aus thermoplastischem Kunststoff gemäß dem Oberbegriff des Anspruchs 1.

In der EP 1 115 551 B1 ist eine gattungsgemäße Vorrichtung zur Herstellung von Kunststoffrohren beschrieben, bei der zwischen dem Rohrkopf und der Kalibriereinrichtung eine Vakuumkammer angeordnet ist, in die Messvorrichtungen zur Erfassung des Außendurchmessers des Rohres eingebaut sind. Diese Messvorrichtungen steuern in Abhängigkeit von dem gewünschten Rohraußendurchmesser den in der Vakuumkammer herrschenden Unterdruck, d. h., das extrudierte, im plastischen Zustand befindliche Rohr wird auf den gewünschten Außendurchmesser durch Aufsaugen vergrößert. Das Extrusionswerkzeug dieser bekannten Vorrichtung besitzt einen verstellbaren Ringspalt, mit dem in Verbindung mit der Vakuumkammer eine genaue Rohrwanddicke einstellbar ist, die in Abhängigkeit vom Rohraußendurchmesser auch variiert werden kann.

Die DE 202 19 089 U1 beschreibt eine weitere gattungsgemäße Vorrichtung mit einer zwischen dem Extrusionswerkzeug und der Kalibriereinrichtung vorgesehenen Vakuumkammer. Diese Vakuumkammer entspricht im Wesentlichen der der EP 1 115 551 B1. Im Unterschied dazu ist die Wandung der Vakuumkammer perforiert, so dass ein Kühlmedium durch ihre Wandung hindurch auf die Außenseite des Rohres führbar ist.

Eine ebenfalls gattungsgmäße Vorrichtung offenbart die DE 20 2004 019 566 U1. Bei dieser Vorrichtung läuft der aus dem Extrusionswerkzeug kommende Hohlstrang in eine Führungskammer ein, die auf Abstandsbolzen befestigte Führungsringe aufweist, deren Innendurchmesser in Extrusionsrichtung kontinuierlich zunimmt. Die Innendurchmesser der Führungsringe bilden dabei definierte Abrisskanten für den Hohlstrang. Der Ausgang der Führungskammer schließt unmittelbar an den Eingang der Kalibriereinrichtung an. Der Hohlstrang wird damit zwischen dem Extrusionswerkzeug und der Kalibriereinrichtung sicher geführt, und letzterer im passenden Format übergeben. Um das Anlegen des Hohlstrangs an die Führungsringe zu unterstützen, kann an die Führungskammer ein Vakuum angelegt werden. Eine Beeinflussung der Wandstärke des aus der Ringspaltdüse des Extrusionswerkzeugs austretenden Hohlstrangs ist mit dieser Führungskammer nicht möglich

In der prioritätsälteren, nicht vorveröffentlichten EP 1 914 060 A2 ist eine Vorrichtung zum Extrudieren von Hohlsträngen aus thermoplastischem Kunststoff mit einem Extrusionswerkzeug und einer auf das Extrusionswerkzeug axial zustellbaren Kalibriereinrichtung mit radial verstellbarem Einlauf offenbart. Zwischen dem Extrusionswerkzeug und der Kalibriereinrichtung ist eine Formkammer zur Dimensionsbeeinflussung des aus einer Ringspaltdüse des Extrusionswerkzeugs austretenden heißen, noch formbaren Hohlstranges angeordnet. In der Formkammer ist ein koaxial zur Ringspaltdüse angeordneter stationärer oder axial verstellbarer Formstopfen angeordnet.

In der JP 04 11 9818 A ist eine Anordnung zur Extrusion von Kunststoffrohren beschrieben. Diese Anordnung besteht unter anderem aus einem Extruder mit einem Rohrkopf, aus dessen Ringspaltdüse, das heiße, noch formbare Rohr austritt und mittels eines am Ende der Extrusionslinie angeordneten Abzugs durch eine Kalibrier- und Kühleinheit gezogen wird, die einen Vakuumtank mit einer an dessen Eingang angeordneten Kalibrierhülse aufweist. In der Kalibrierhülse wird das extrudierte, noch formbare Rohr auf den gewünschten Außendurchmesser fixiert. Das aus der Ringspaltdüse des Rohrkopfes austretende Rohr kann über seinen Umfang unterschiedliche Wandstärken haben, was nicht erwünscht ist. In der beschriebenen Anordnung sind daher Vorkehrungen getroffen, um vorhandene Wandstärkenschwankungen des extrudierten Rohres ausgleichen zu können. Dazu gehört eine Stützscheibe, die im Inneren des extrudierten Rohres konzentrisch zur Ringspaltdüse des Rohrkopfes angeordnet ist und einen Durchmesser besitzt, der etwas größer ist als der Innendurchmesser des extrudierten Rohres. Die Stützscheibe ist an einer Stange befestigt, die zentrisch zur Ringspaltdüse vom Rohrkopf in Richtung der Kalibrier- und Kühleinheit abragt. Die Stützscheibe ist im Abstand vom Einlauf der Kalibrierhülse angeordnet. Zur Egalisierung von Wandstärkenschwankungen des extrudierten Rohres kann die Kalibrierhülse zur Ringspaltdüse des Rohrkopfes, und damit auch zur Stützscheibe, axial versetzt werden.

Aufgabe der vorliegenden Erfindung ist es, eine weitere gattungsgemäße Vorrichtung zum Extrudieren von Hohlsträngen aus thermoplastischem Kunststoff zur Verfügung zu stellen.

Diese Aufgabe wird erfindungsgemäß mit einer Vorrichtung gelöst, die die Merkmale des Anspruchs 1 aufweist.

Die erfindungsgemäße Vorrichtung ist insbesondere für den Einsatz in Extrusionslinien gedacht, mit denen ein Dimensionswechsel bei laufender Produktion fahrbar ist. Sie ist bei Neuinvestitionen mit Vorteil einsetzbar, aber auch für Nachrüstungen geeignet.

Mit der erfindungsgemäßen Vorrichtung lässt sich der aus der Ringspaltdüse des Extrusionswerkzeugs austretende Hohlstrang nachträglich in seiner Wandstärke und seinem Querschnitt im Sinne einer Vergrößerung bzw. Verkleinerung verändern, so dass bei einer entsprechend ausgerüsteten Extrusionslinie ein Dimensionswechsel bei laufender Produktion möglich ist. Durch axiales und/oder radiales Verstellen von Formstopfen und/oder Einlauf der Kalibriereinrichtung relativ zueinander wird zwischen ihnen ein veränderbarer Ringspalt gebildet, durch den der extrudierte Hohlstrang in seiner Dimension in Anpassung an die Einstellung der Kalibriereinrichtung beeinflussbar ist.

Der Formstopfen der Formkammer wirkt in Verbindung mit dem den Ringspalt durchsetzenden, plastifizierten Kunststoff gewissermaßen wie ein eingangseitiger Verschluss der Kalibriereinrichtung. Das kann für weitere, sehr vorteilhafte Ausgestaltungen der Erfindung genutzt werden.

So kann über den Formstopfen Kühlgas direkt in den in der Kalibriereinrichtung befindlichen Hohlstrang eingeblasen werden, so dass dort gleichzeitig eine Kühlung des Hohlstrangs von außen und innen erfolgt. Das sorgt für einen gleichmäßigen Spannungsaufbau in der Wandung des Hohlstrangs und für ein Produkt hoher Festigkeit. Der Formstopfen verhindert gleichzeitig eine eventuelle Rückströmung des Kühlgases in den zwischen ihm und der Ringspaltdüse gebildeten Schmelzekonus des extrudierten Hohlstrangs, was zu einer Abkühlung des Hohlstrangs an dieser Stelle führen würde, der dann aufgrund seiner rheologischen Eigenschaften nicht mehr in die gewünschte Form gebracht werden könnte.

Der Formstopfen verhindert gleichzeitig einerseits nicht nur, dass Warm-bzw. Heißluft aus dem vom Schmelzekonus umgebenden Raum in die Kalibriereinrichtung gelangt, was negativen Einfluss auf die Innenkühlung in der Kalibriereinrichtung hätte, sondern er eröffnet andererseits auch die Möglichkeit, Warm- oder Heißluft in diesen Raum einzublasen, mit positiven Auswirkungen auf die Verformbarkeit des Hohlstrangs vor seinem Eintritt in die Kalibriereinrichtung und seine Stabilität.

Weitere vorteilhafte Ausgestaltungen der Erfindung ergeben sich aus den übrigen Unteransprüchen.

Die Erfindung wird nachstehend anhand von Ausführungsbeispielen einer Rohrextrusionslinie näher erläutert. In der dazugehörigen Zeichnung zeigt:
- Fig. 1: eine schematische Seitenansicht einer Extrusionslinie,
- Fig. 2: einen vergrößerten schematischen Ausschnitt A gemäß Fig. 1 nach einer ersten Ausführungsform der Erfindung mit der Vorrichtung in einem ersten Betriebszustand,
- Fig. 3: eine Darstellung der Vorrichtung gemäß Figur 2 in einem zweiten Betriebszustand,
- Fig. 4: einen vergrößerten schematischen Ausschnitt A gemäß Fig. 1 nach einer zweiten Ausführungsform der Erfindung mit der Vorrichtung in einem ersten Betriebszustand,
- Fig. 5: eine Darstellung der Vorrichtung gemäß Figur 4 in einem zweiten Betriebszustand,
- Fig. 6: einen vergrößerten schematischen Ausschnitt A gemäß Fig. 1 nach einer dritten Ausführungsform der Erfindung,
- Fig. 7: eine vergrößerte Darstellung des Formstopfens der Vorrichtung gemäß Fig. 6,
- Fig. 8: einen Schnitt A-A gemäß Fig. 7,
- Fig. 9: einen vergrößerten schematischen Ausschnitt A gemäß Fig. 1 nach einer vierten Ausführungsform der Erfindung, und
- Fig.10: einen vergrößerten schematischen Ausschnitt B gemäß Fig.9.

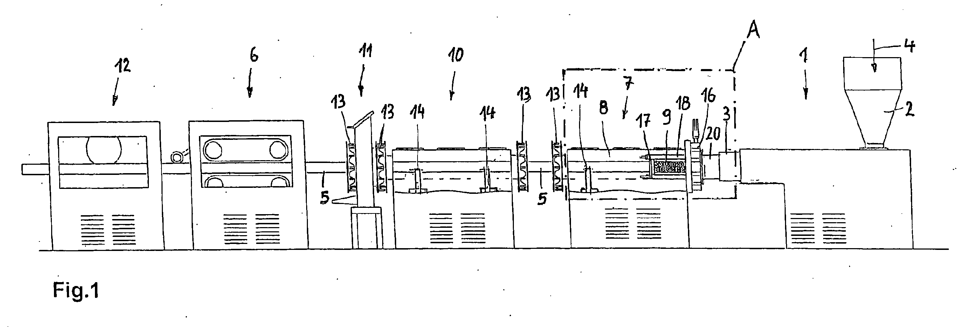

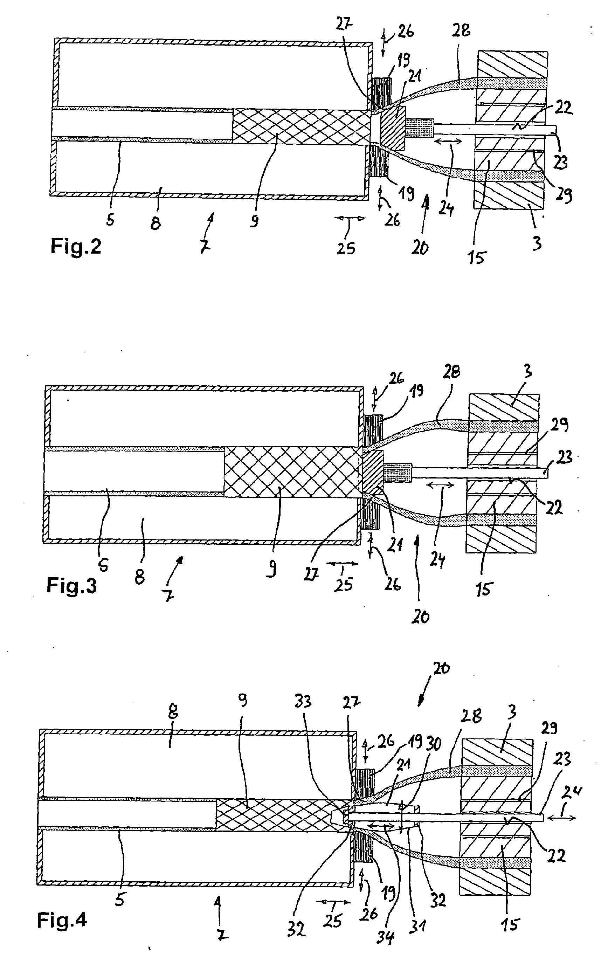

Die in Figur 1 dargestellte Extrusionslinie zur Herstellung von Rohren umfasst eine Extrudereinheit 1 mit einem Aufgabetrichter 2, einer aus der Zeichnung nicht ersichtlichen Extruderschnecke und einem Rohrkopf 3. Über den Aufgabetrichter 2 wird ein thermoplastischer Kunststoff 4 in Granulatoder Pulverform der Extrudereinheit 1 zugeführt. In dieser wird das Granulat bzw. Pulver erwärmt, geknetet und plastifiziert. Anschließend wird der Kunststoff 4 als formbare Masse durch die Extruderschnecke in den Rohrkopf 3 gefördert und dort durch eine Ringspaltdüse 15 (siehe Fig. 2 bis 9) gedrückt.

Nach dem Austritt aus der Ringspaltdüse 15 wird das heiße, noch verformbare Rohr 5 mittels eines am Ende der Extrusionslinie angeordneten Raupenabzugs 6 durch eine Kalibrier- und Kühleinheit 7 gezogen, die einen Vakuumtank 8 mit einer an dessen Eingang angeordneten Kalibrierhülse 9 aufweist. Die Kalibrierhülse 9 ist stufenlos im Durchmesser einstellbar, so dass das extrudierte, noch formbare Rohr 5 auf den gewünschten Außendurchmesser fixiert werden kann. Nach dem Verlassen der Kalibrier- und Kühleinheit 7 tritt das Rohr 5 in eine Kühlstrecke 10 ein, in der es auf Raumtemperatur abgekühlt wird. Zwischen der Kühlstrecke 10 und dem Raupenabzug 6 ist ein Ultraschallscanner 11 angeordnet, mit dem der Durchmesser und die Wanddicke des extrudierten Rohres 5 erfasst werden. Dem Raupenabzug 6 schließt sich eine Trennsäge 12 an, in der das Rohr 5 abgelängt wird. Zur Aufrechterhaltung eines Unterdrucks in der Kalibrier- und Kühleinheit 7, der Kühlstrecke 10 und dem Ultraschallscanner 11 sind Dichtungen 13 vorgesehen, die das durchlaufende Rohr 5 abdichtend umschließen.

Da das extrudierte Rohr 5 erst nach Verlassen der Kühlstrecke 10 ausgehärtet, d. h. formstabil ist, muss es zuvor abgestützt werden, um ein Durchhängen und damit Deformieren zu vermeiden. Dazu sind in der Kühlstrecke 10 zwei und in der Kalibrier- und Kühleinheit 7 eine Rohrunterstützung 14 vorgesehen.

Die Kalibrierhülse 9 besitzt einen ringförmigen Einlaufkopf 16 und einen ringförmigen Auslasskopf 17. Während der Einlaufkopf 16 außerhalb des Vakuumtanks 8 angeordnet ist, befindet sich der Auslasskopf 17 im Vakuumtank 8 (Fig. 1). Der Auslasskopf 17 hat einen fixen Innendurchmesser, der mindestens dem größten in der Extrusionsanlage zu fahrenden Rohrdurchmesser entspricht. Er ist gegenüber dem ortsfesten Einlaufkopf 16 in Axialrichtung der Kalibrierhülse 9 verlagerbar, um deren Durchmesser zu ändern. Dazu sind mindestens zwei Spindeleinheiten 18 vorgesehen, deren Gewindespindeln motorisch angetrieben werden.

Der Einlaufkopf 16 weist radial verstellbare Segemente 19 auf (Fig. 2 bis 9), die gleichmäßig auf den Umfang des zu kalibrierenden Rohres 5 angeordnet sind und einen konischen Einlauf der Kalibrierhülse 9 bilden. Zum weiteren Aufbau der Kalibrierhülse 9 wird auf die DE 10 2005 002 820 B3 verwiesen, deren diesbezüglicher Offenbarungsgehalt hiermit zum Gegenstand dieser Ausführungsbeispiele gemacht wird. Diese Kalibrierhülse 9 ist, so wie die übrigen Ausrüstungen der Extrusionslinie auch, zum Dimensionswechsel bei laufender Produktion geeignet.

Zwischen dem Rohrkopf 3 und der Kalibrierhülse 9 ist eine Formkammer 20 zur Dimensionsbeeinflussung, d. h., der Änderung der Wandstärke und des Durchmessers, des aus der Ringspaltdüse 15 austretenden plastifizierten Rohres 5 vorgesehen, die nachstehend anhand der Figuren 2 bis 10 in Ausführungsbeispielen näher erläutert wird. In diesen schematischen Darstellungen sind von den Verstellvorrichtungen der Kalibrierhülse 9 der Übersicht halber nur Segmente 19 des Einlaufkopfs 16 dargestellt.

Bei dem Ausführungsbeispiel gemäß den Figuren 2 und 3 besitzt die Formkammer 20 der Vorrichtung einen Formstopfen 21 mit kreisförmigem Querschnitt, der sich in Produktionsrichtung verjüngt. Der Formstopfen 21 ist koaxial zur Ringspaltdüse 15 angeordnet und in einer zentrischen Bohrung 22 der Ringspaltdüse 15 über eine Haltestange 23 axial verschiebbar geführt, was durch Pfeile 24 angedeutet ist. Ein entsprechender, im Extrusionswerkzeug vorgesehener Antrieb der Haltestange 23 ist nicht dargestellt.

Der Vakuumtank 8 ist für Anfahrzwecke axial auf den Rohrkopf 3 zustellbar, was durch Pfeile 25 angedeutet ist. Weiterhin sind die Segmente 19, wie schon zuvor erwähnt wurde radial zustellbar, was durch Pfeile 26 symbolisiert ist. Die Segmente 19 und/oder der Formstopfen 21 kann, wie bei den anderen Ausführungsbeispielen auch, beheizbar ausgeführt sein.

Die durch die Pfeile 24, 25 und 26 angedeuteten Verstellmöglichkeiten dienen der Bildung eines Ringspalts 27 zwischen dem Formstopfen 21 und den Segmenten 19 zur Änderung des Querschnitts und/oder der Wandstärke des aus der Ringspaltdüse 15 austretenden Hohlstrangs 5. Dabei kann aufgrund der ohnehin vorgesehenen Verfahrbarkeit des Vakuumtanks 8 in Richtung der Pfeile 25 der Formstopfen 21 auch stationär ausgeführt werden, d. h., es kann auf einen Axialantrieb seiner Haltestange 23 verzichtet werden.

In dem in Figur 2 gezeigten Betriebszustand ist die Kalibrierhülse 9 auf ihren kleinsten Durchmesser eingestellt. Die Segmente 19 des Einlaufkopfes 16 sind entsprechend zugefahren. Aufgrund der in Figur 2 dargestellten Relativstellungen zwischen den Segmenten 19 und dem Formstopfen 21 wird der Durchmesser des aus der Ringspaltdüse 15 austretenden Hohlstranges 5 auf den eingestellten Durchmesser der Kalibrierhülse 9 reduziert und seine Wandstärke an diesen Durchmesser angepasst. Mit dieser Einstellung können Rohre 5 mit kleinem Durchmesser und geringer Wandstärke gefahren werden.

In dem Betriebszustand gemäß Figur 3 ist die Kalibrierhülse 9 auf ihren größten Durchmesser eingestellt. Die Segmente 19 ihres Einlaufkopfes 16 sind entsprechend aufgefahren und der Formstopfen 21 ist durch seine axiale Verstellung (Pfeile 24) und/oder durch axiale Verstellung des Vakuumtanks 8 (Pfeile 25) in größere Überdeckung mit den Segmenten 19 gebracht worden. Mit dieser Einstellung werden Rohre 5 mit großem Durchmesser und großer Wandstärke produziert. Rohre 5 mit Zwischengrößen (Durchmesser und Wandstärke) können durch entsprechende Veränderung der Relativstellungen von Formstopfen 21 und Segmenten 19 hergestellt werden.

Aus den Darstellungen gemäß den Figuren 2 und 3 geht hervor, dass der Formstopfen 21 in Verbindung mit dem den Ringspalt 27 durchsetzenden Kunststoff einen eingangseitigen Verschluss der Kalibrierhülse 9 bildet. Dieser Verschluss kann dazu genutzt werden, in den zwischen dem Rohrkopf 3 und dem Einlaufkopf 16 der Kalibrierhülse 9 gebildeten Schmelzekonus 28 Stützluft einzublasen. Das kann über in den Figuren 2 und 3 symbolisch eingezeichnete, in der Stirnseite der Ringspaltdüse 15 mündende Zuleitungen 29 geschehen. Um eine Abkühlung des Schmelzekonus 28 zu verhindern, ist es zweckmäßig als Stützluft Heißluft zu verwenden. Dabei ist die Stützluft je nach gewünschtem Durchmesser und gewünschter Vorlage an der Kalibrierhülse 9 in ihrer Menge variabel einstellbar.

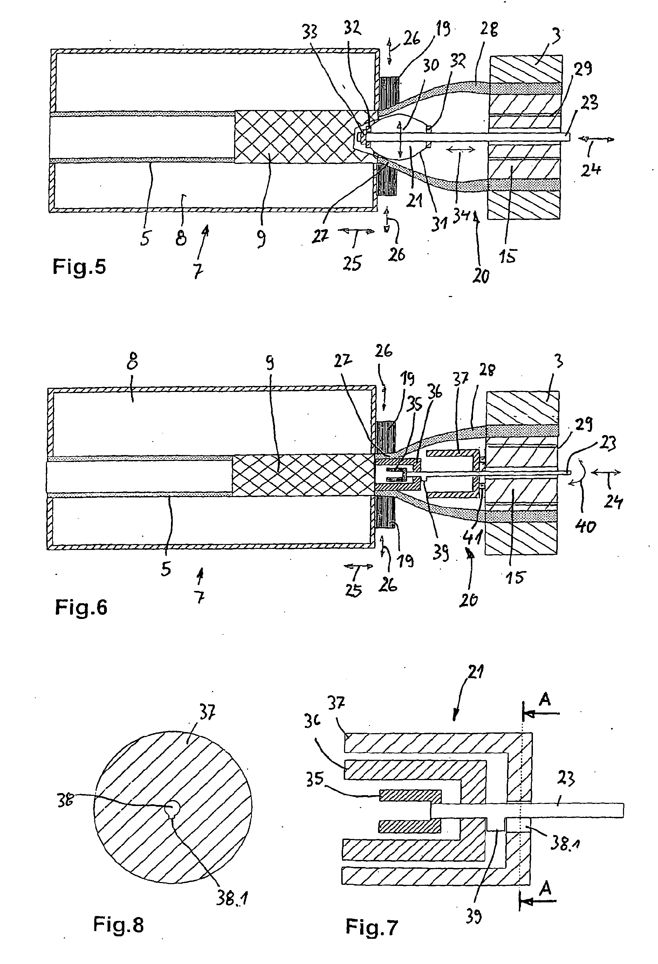

In dem in den Figuren 4 und 5 dargestellten Ausführungsbeispiel ist der Formstopfen 21 zusätzlich zu seiner axialen Verstellbarkeit auch radial verstellbar, was durch die Pfeile 30 symbolisch dargestellt ist. Ansonsten entspricht dieses Ausführungsbeispiel dem in den Figuren 2 und 3 dargestellten.

Der Formstopfen 21 ist in diesem Ausführungsbeispiel balgartig ausgeführt. Er besitzt eine Umhüllung 31 aus einem temperaturbeständigen, elastischen Material, die endseitig an Flanschen 32 befestigt ist. Die beiden Flansche 32 besitzen eine zentrale Bohrung, mit der sie auf die Haltestange 23 aufschiebbar sind. Der am Ende der Haltestange 23 vorgesehene Flansch 32 ist auf dieser axial festgelegt oder liegt zumindest an einem Anschlag 33 der Haltestange 23 an. Der innen liegende Flansch 32 ist unabhängig von der axialen Verschiebbarkeit der Haltestange 23 (Pfeile 24) axial verschiebbar auf dieser gelagert, wie durch die Pfeile 34 symbolisiert ist. Diese Verschiebbarkeit des Flansches 32 kann z. B. durch ein die Haltestange 23 teleskopierendes, nicht dargestelltes, mit dem Flansch 32 verbundenes Rohr erreicht werden, welches axial verstellbar ist und in gewünschten axialen Positionen axial festlegbar ist. Aufgrund dieser Verstellmöglichkeit des Formstopfens 21 kann dessen Durchmesser verändert werden, d. h., seine radiale Dimension ist variabel. Diese zusätzliche Verstellmöglichkeit erhöht die Variabilität des gesamten Systems hinsichtlich der Dimensionsbeeinflussung des aus der Ringspaltdüse 15 austretenden Rohres 5.

In dem in den Figuren 6 bis 8 gezeigten Ausführungsbeispiel wird ebenfalls wieder ein Formstopfen 21 mit variablen radialen Abmessungen eingesetzt. Im Gegensatz zu dem Formstopfen gemäß dem vorstehenden Ausführungsbeispiel ist der Formstopfen 21 dieses Ausführungsbeispiels jedoch nicht stufenlos radial verstellbar. Er besteht aus drei teleskopisch ineinander schiebbaren Bechern 35, 36 und 37. Der kleinste Becher 35 ist auf der Haltestange 35 axial festgelegt. Der mittlere Becher 36 und der größte Becher 37 besitzen schlüssellochartige Zentralbohrungen 38, mit denen sie axial verschiebbar auf der Haltestange 23 sitzen. Die Haltestange 23 ist wiederum axial verschiebbar (Pfeile 24) gelagert und zusätzlich dazu auch noch drehbar (Pfeile 40). Sie besitzt weiterhin einen Nocken 39, der bei fluchtender Anordnung mit einem Fortsatz 38.1 der Zentralbohrung 38 durch diese hindurch fädelbar ist und durch Verdrehen der Haltestange 23 aus der Überdeckung mit dem Fortsatz 38.1 gebracht werden kann.

In der Darstellung gemäß Figur 6 ist der mittlere Becher 36 im Einsatz. Wenn der kleinste Becher 35 verwendet werden soll, wird der Nocken 39 der Haltestange 23 in fluchtende Übereinstimmung mit dem Fortsatz 38.1 der Zentralbohrung 38 des mittleren Bechers 36 gebracht, durch diese hindurch gefädelt, und anschließend gegenüber dem Fortsatz 38.1 verdreht. Der kleinste Becher 35 und der mittlere Becher 36 können nun mit der Haltestange 23 in Richtung des Rohrkopfes 3 gezogen werden. Anschließend kann dann der kleinste Becher 35 allein durch Verschieben der Haltestange 23 zu den Segmenten 19 der Kalibrierhülse 9 verschoben werden.

Wenn der kleinste Becher 35 gegen den größten Becher 37 ausgetauscht werden soll, wird der kleinste Becher 35 mit der Haltestange 23 zurückgezogen und der Nocken 39 nacheinander durch die Fortsätze 38.1 von mittlerem Becher 36 und größtem Becher 37 hindurch gefädelt. An der Stirnwand der Ringspaltdüse 15 sind Abstandhalter 41 vorgesehen, die ermöglichen, dass der Nocken 39 hinter dem größten Becher 37 verdreht werden kann. Nun kann der größte Becher 37 zusammen mit den beiden anderen Bechern 35 und 36 durch axiales Verschieben der Haltestange 23 auf die Segmente 19 der Kalibrierhülse 9 zugestellt werden.

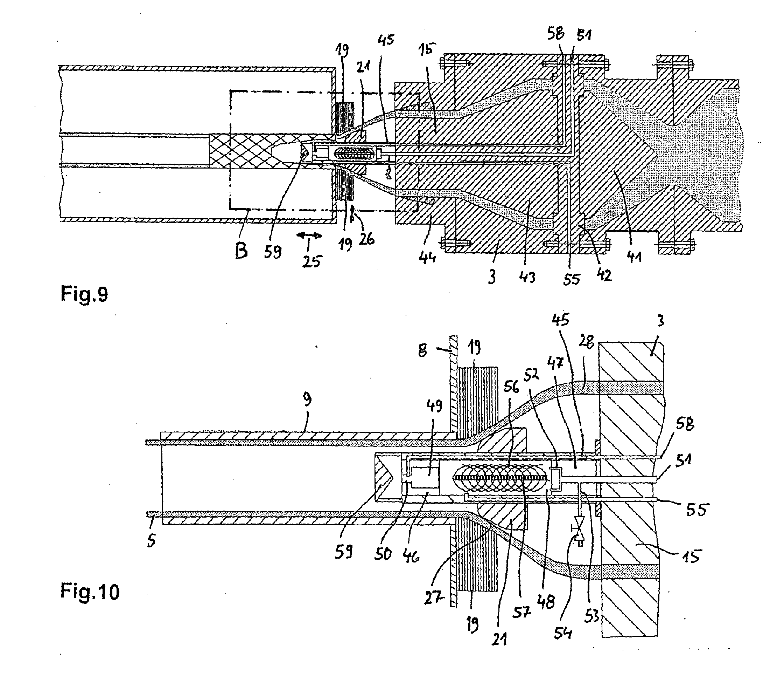

In dem in den Figuren 9 und 10 dargestellten Ausführungsbeispiel wird die oben erläuterte Verschlussfunktion des Formstopfens 21 zusätzlich noch zur Einblasung von Kühlluft in den Innenraum des in der Kalibrierhülse 9 befindlichen Hohlstrangs 5 genutzt. Ansonsten entspricht dieses Ausführungsbeispiel in seiner Funktion dem Ausführungsbeispiel gemäß den Figuren 2 und 3.

In dem in Figur 9 gezeigten vorderen Ende des Rohrkopfes 3 wird die von der Extruderschnecke geförderte Kunststoffschmelze ringförmig aufgeteilt. Dazu ist eine Dornhalterspitze 41 vorgesehen, die kegelförmig in den Strom der Kunststoffschmelze hineinragt. An die Dornhalterspitze 41 schließt sich eine Dornhalterstegplatte 42 an, über die ein Dorn 43 mit der Dornhalterspitze 41 durch Verschraubung verbunden ist. An seinem vorderen Ende ist der Dorn 43 von einem hohlzylindrischen Mundstück 44 umgeben, die zusammen die Ringspaltdüse 15 bilden.

An die Stirnseite der Ringspaltdüse 15 ist ein Rohr 45 angeflanscht, welches koaxial zur Ringspaltdüse 15 angeordnet ist. Dieses Rohr 45 durchragt den Einlasskopf 16 und ragt in die Kalibrierhülse 9 hinein. Der Formstopfen 21 sitzt axial unverschieblich auf dem Rohr 45.

Das Rohr 45 ist an seinem vorderen Ende durch einen vorderen Einsatz 46 und an seinem hinteren Ende durch einen hinteren Einsatz 47 verschlossen. Diese beiden Einsätze 46 und 47 schließen zwischen sich eine hohlzylindrische Kammer 48 ein. In dem Einsatz 46 ist eine in die Kammer 48 mündende Sammelkammer 49 mit einem in die Kalibrierhülse 9 mündenden Auslasskanal 50 vorgesehen.

Der Einsatz 47 besitzt eine zentrale Bohrung 51, die über Verzweigungen 52 in die Kammer 48 führt. Diese Bohrung 51 setzt sich im Dorn 43 fort und wird in der Dornhalterstegplatte 42 nach außen geführt. Innerhalb des hinteren Einsatzes 47 zweigt von der Bohrung 51 ein Bypass 53 ab, der durch die Wandung des Rohres 45 in den vom Schmelzekonus 28 gespannten Raum geführt ist. In diesen Bypass 53 ist ein Regelventil 54 eingebaut.

In der Dornhalterstegplatte 42 ist weiterhin eine Luftzuführungsbohrung 55 vorgesehen, die in der Nähe der Mittelachse des Dorns 43 rechtwinklig zur Ringspaltdüse 15 hin abgewinkelt ist, ihre Fortsetzung in der Wandung des Rohres 45 findet, und tangential in die Kammer 48 einmündet. Über die Luftzuführungsbohrung 55 wird der Kammer 48 Druckluft mit einem Druck von ca. 7 Bar und einer Temperatur von ca. 20 °C zugeführt. Aufgrund der tangentialen Luftzuführung in die Kammer 48 und der vorgesehenen Auslässe 50 und 52 wirkt die Kammer 48 als Ranquesches Wirbelrohr. In diesem bilden sich zwei Luftströmungen aus: Eine heiße Luftströmung 56 an der Wandung der Kammer 48 und eine kalte Luftströmung 57 in der Näher der Mittelachse der Kammer 48. Die heiße Luftströmung 56 verlässt die Kammer 48 über die Bohrung 51 und strömt über deren Fortsetzung im Dorn 43 ab. Diese heiße Luftströmung 56 hat eine Temperatur von bis zu 110 °C. Die Temperatur der kalten Luftströmung 57 beträgt etwa 0 °C bis 5 °C und verlässt die Kammer 48 über die Sammelkammer 49 und den Auslasskanal 50 und kühlt so das extrudierte Rohr 5 zusätzlich zu der in der Vakuumkammer 8 stattfindenden Außenkühlung auf seiner Innenseite.

Um die Kühlung intensiver zu gestalten, wird der die Kammer 48 verlassenden Kühlluft 57 Wasser beigemischt. Dazu ist eine Wasserzuführungsbohrung 58 vorgesehen, die durch die Dornhalterstegplatte 42 und den Dorn 43 hindurch zur Stirnseite der Ringspaltdüse 15 geführt ist, sich dort in der Wandung des Rohres 45 bis zu dessen vorderen Ende fortsetzt und dort über den vorderen Einsatz 46 in den Auslasskanal 50 mündet.

Um die feuchte Kühlluftströmung effektiv in den Bereich der Innenwandung des extrudierten Rohres 5 zu bringen, ist vor dem Auslasskanal 50 eine entsprechende Luftleiteinrichtung 59 vorgesehen, die in diesem Ausführungsbeispiel als Kegel ausgeführt ist.

Der Kaltluftstrom 57 macht etwa 80 bis 90 Prozent und der Warm- bzw. Heißluftstrom 56 etwa 10 bis 20 Prozent der zugeführten Druckluftmenge aus.

Über den Bypass 53 wird eine geregelte Menge der die Kammer 48 verlassenden Heißluft in den durch den Schmelzekegel 28 aufgespannten Raum zwischen der Ringspaltdüse 15 und dem Einlasskopf 16 der Kalibrierhülse 9 eingeblasen, die den Schmelzekegel 28 stützt und gleichzeitigt dessen Verformbarkeit unterstützt.

Alternativ kann die Ranquesche Wirbelkammer auch in der Ringspaltdüse 15 des Extrusionswerkzeugs 3 angeordnet sein, wobei ihr Kühlluftaustritt dann in ein Halterohr mündet auf dem der Formstopfen 21 sitzt, und welches sich axial von der Stirnseite der Ringspaltdüse 15 bis in die Kalibrierhülse 9 hinein erstreckt und dort einen Auslass für die Kühlluft besitzt. Der Heißluftaustritt der Ranqueschen Wirbelkammer mündet dann in die Stirnseite der Ringspaltdüse 15 und führt in den von dem extrudierten Hohlstrang 5 zwischen Ringspaltdüse 15 und Formstopfen 21 aufgespannten Raum. Diese Ausführungsform der Erfindung ist in der Zeichnung nicht dargestellt.

## Patentansprüche

1. Vorrichtung zum Extrudieren von Hohlsträngen aus thermoplastischem Kunststoff mit einem Extrusionswerkzeug (3) und einer auf das Extrusionswerkzeug (3) axial zustellbaren Kalibriereinrichtung (9) mit radial verstellbarem, konischem Einlauf, zwischen denen eine Formkammer (20) zur Dimensionsbeeinflussung des aus einer Ringspaltdüse (15) des Extrusionswerkzeugs (3) austretenden heißen, noch formbaren Hohlstranges (5) angeordnet ist, **dadurch gekennzeichnet, dass** die Formkammer (20) einen koaxial zur Ringspaltdüse (15) angeordneten stationären oder axial und/oder radial verstellbaren Formstopfen (21) aufweist, wobei Formstopfen (21) und/oder Einlauf der Kalibriereinrichtung (9) durch axiales und/oder radiales Verstellen relativ zueinander zwischen sich einen Ringspalt (27) zur Änderung des Querschnitts und/oder der Wandstärke des aus der Ringspaltdüse (15) austretenden Hohlstranges (5) bilden.

2. Vorrichtung nach Anspruch 1, **dadurch gekennzeichnet, dass** dem Formstopfen (21) ein in die Kalibriereinrichtung (9) mündender Kühlluftaustritt (50) nachgeordnet ist.

3. Vorrichtung nach Anspruch 1 oder 2, **dadurch gekennzeichnet, dass** sie Mittel zum Einblasen von Stützluft, insbesondere aufgeheizter Stützluft, in den von dem extrudierten Hohlstrang (5) zwischen Ringspaltdüse (15) und Formstopfen (21) aufgespannten Raum aufweist.

4. Vorrichtung nach Anspruch 2 oder 3, **dadurch gekennzeichnet, dass** sie eine Ranquesche Wirbelkammer (48) zur Erzeugung der Kühlluft und/oder der heißen Stützluft besitzt.

5. Vorrichtung nach Anspruch 4, **dadurch gekennzeichnet, dass** die Ranquesche Wirbelkammer (48) in einem den Formstopfen (21) tragenden Rohr (45) angeordnet ist und einen Kühlluftaustritt (50) in die Kalibriereinrichtung (9) sowie einen Heißluftaustritt (53) in den von dem extrudierten Hohlstrang (5) zwischen Ringspaltdüse (15) und Formstopfen (21) aufgespannten Raum besitzt.

6. Vorrichtung nach einem der vorstehenden Ansprüche 2 bis 4, **dadurch gekennzeichnet, dass** die Ranquesche Wirbelkammer in dem Extrusionswerkzeugs (3) angeordnet ist, ihr Kühlluftaustritt in ein axial von der Stirnseite der Ringspaltdüse (15) abragendes und koaxial zu diesem angeordnetes Halterohr des Formstopfen (21) mündet, und ihr Heißluftaustritt auf der Stirnseite der Ringspaltdüse (15) in den von dem extrudierten Hohlstrang (5) zwischen Ringspaltdüse (15) und Formstopfen (21) aufgespannten Raum führt.

7. Vorrichtung nach einem der vorstehenden Ansprüche 2 bis 6 **dadurch gekennzeichnet, dass** vor dem Kühlluftaustritt (50) eine Leiteinrichtung (59) zur Ablenkung des Kühlluftstroms zur Innenwandung des extrudierten Hohlstranges (5) angeordnet ist.

8. Vorrichtung nach einem der vorstehenden Ansprüche 2 bis 7 **dadurch gekennzeichnet, dass** in den Kühlluftaustritt (50) eine Wasserzuführung (58) mündet.

9. Vorrichtung nach einem der vorstehenden Ansprüche, **dadurch gekennzeichnet, dass** der Formstopfen (21) und/oder der Einlauf (19) der Kalibriereinrichtung (9) beheizbar sind.

## Claims

1. Device for extruding tubes from thermoplastic material, comprising an extrusion tool (3) and a coaxial metering mechanism (9) with radially adjustable and conical feed inset, between which a die chamber (20) is arranged for dimensioning a hot and still ductile tube leaving an annular gap nozzle (15 ) of the extrusion tool (3), **characterised in that** the die chamber (20) exhibits a stationary or radially and /or axially adjustable die block (21) that is arranged coaxial to the annular gap nozzle (15), wherein the die blocks (21) and / or feed inlet of the metering mechanism (9) form an annular gap (27) between them through axial and / or radial adjustment relative to one another. This gap serves for the adjustment of the cross-section and / or wall thickness of the tube (5) leaving the annular gap nozzle (15).

2. Device according to claim 1, **characterised in that** a cooling air outlet (50) leading to the metering mechanism (9) is arranged downstream to the die block (21).

3. Device according to claim 1 or 2, **characterised in that** it exhibits means for blowing process air, in particular heated process air, in to the space created by the extruded tube (5) between the annular gap nozzle (15) and the die block (21).

4. Device according to claim 2 or 3, **characterised in that** it possesses a Ranque-Hilsch vortex tube (48) for production of the cooling air and / or hot process air.

5. Device according to claim 4, therein **characterised** that the Ranque-Hilsch vortex tube (48) is arranged in a pipe (45) supporting the die block 21) and possesses a cooling air outlet (50) leading to the metering mechanism (9) as well as a hot air outlet (53) leading to the space created by the extruded tube (5) between the annular gap nozzle (15) and the die block (21).

6. Device according to one of the preceding claims 2 to 4, **characterised in that** the Ranque-Hilsch vortex tube is arranged in the extrusion tool (3), its cooling air outlet leads to a support pipe of the die block (21) that is coaxial and protrudes axially from the front side of the annular gap nozzle (15) and its hot air outlet at the front side of the annular gap nozzle (15) leads to the space created by the extruded tube (5) between the annular gap nozzle (15) and the die block (21).

7. Device according to one of the preceding claims 2 to 6, **characterised in that** a guidance mechanism (59) is arranged upstream to the cooling air outlet (50) for deflection of the cooling air stream to the inner wall of the extruded tube (5).

8. Device according to one of the preceding claims 2 to 7, **characterised in that** a water inlet pipe (58) leads to the cooling air outlet (50).

9. Device according to one of the preceding claims, **characterised in that** the die block (21) and / or the inlet (19) of the metering mechanism are heatable.

## Revendications

1. Dispositif pour l'extrusion de corps creux en matériau thermoplastique avec un outil d'extrusion (3) et un dispositif d'étalonnage (9) pouvant être amené axialement sur l'outil d'extrusion (3) avec une admission conique radialement réglable entre lesquels est disposée une chambre de moulage (2) pour influencer la taille du corps creux (5) chaud et encore façonnable sortant de la buse à interstice annulaire (15) de l'outil d'extrusion (3), **caractérisé en ce que** la chambre de moulage (20) présente un bouchon de moulage (21) stationnaire ou réglable axialement et/ou radialement disposé coaxialement à la buse à interstice annulaire (15), le bouchon de moulage (21) et/ou l'admission du dispositif d'étalonnage (9) formant par le déplacement axial et/ou radial réciproque entre eux, un interstice annulaire (27) pour la modification de la section et/ou de l'épaisseur de paroi du corps creux (5) sortant de la buse à interstice annulaire (15).

2. Dispositif selon la revendication 1, **caractérisé en ce qu'**une sortie d'air de refroidissement (5) débouchant dans le dispositif d'étalonnage (9) est disposée en aval du bouchon de moulage (21).

3. Dispositif selon la revendication 1 ou 2, **caractérisé en ce qu'**il présente des moyens pour souffler de l'air de support, en particulier de l'air de support chauffé dans l'espace s'étendant depuis le corps creux extrudé (5) entre la buse à interstice annulaire (15) et le bouchon de moulage (21).

4. Dispositif selon la revendication 2 ou 3, **caractérisé en ce qu'**il possède une chambre de turbulences de Ranque (48) pour produire l'air de refroidissement et/ou l'air de support chaud.

5. Dispositif selon la revendication 4, **caractérisé en ce que** la chambre de turbulences de Ranque (48) est disposée dans un tube (45) portant le bouchon de moulage (21) et qu'elle possède une sortie d'air de refroidissement (50) vers le dispositif d'étalonnage (9) ainsi qu'une sortie d'air chaud (53) vers l'espace s'étendant depuis le corps creux extrudé (5) entre la buse à interstice annulaire (15) et le bouchon de moulage (21).

6. Dispositif selon l'une quelconque des revendications 2 à 4, **caractérisé en ce que** la chambre de turbulences de Ranque est disposée dans l'outil d'extrusion (3), que sa sortie d'air de refroidissement débouche dans un tube de soutien du bouchon de moulage (21) dépassant axialement de la face frontale de la buse à interstice annulaire (15) et disposé coaxialement à celui-ci, et que sa sortie d'air chaud sur la face frontale de la buse à interstice annulaire (15) mène à l'espace s'étendant depuis le corps creux extrudé (5) entre la buse à interstice annulaire (15) et le bouchon de moulage (21).

7. Dispositif selon l'une quelconque des revendications 2 à 6, **caractérisé en ce qu'**un dispositif de guidage (59) pour dévier le flux d'air de refroidissement vers la paroi intérieure du corps creux extrudé (5) est disposé en amont de la sortie d'air de refroidissement (50).

8. Dispositif selon l'une quelconque des revendications 2 à 7, **caractérisé en ce qu'**une alimentation en eau (58) débouche dans la sortie d'air de refroidissement (50).

9. Dispositif selon l'une quelconque des revendications précédentes, **caractérisé en ce que** le bouchon de moulage (21) et/ou l'admission (19) du dispositif d'étalonnage (9) peuvent être chauffés.
